# EUROPÄISCHE PATENTSCHRIFT

(11) **EP 4 295 003 B1**
(45) Veröffentlichungstag und Bekanntmachung des Hinweises auf die Patenterteilung: **22.01.2025**
(21) Anmeldenummer: 21835275.5
(22) Anmeldetag: 10.12.2021
(51) Int. Cl.: E05D 5/02, E05D 11/00, B62D 25/10

(54) **BÜGELSCHARNIERVORRICHTUNG SOWIE HIERMIT AUSGESTATTETER PERSONENKRAFTWAGEN**
HINGE DEVICE AND PASSENGER CAR EQUIPPED WITH SAME
DISPOSITIF DE CHARNIÈRE ET VOITURE DE TOURISME ÉQUIPÉE DE CELUI-CI

(30) Priorität: 18.02.2021 DE 102021103876
(43) Veröffentlichungstag der Anmeldung: 27.12.2023
(73) Patentinhaber: Bayerische Motoren Werke Aktiengesellschaft, 80809 München (DE)
(72) Erfinder: GUSMINI, Roberto, 80992 München (DE)
(86) Internationale Anmeldenummer: PCT/EP2021/085240
(87) Internationale Veröffentlichungsnummer: WO 2022/174954

(56) Entgegenhaltungen:
- CN-A- 111 661 168
- DE-A1- 102018 125 552
- DE-C2- 19 734 320
- US-A1- 2016 251 036

## Beschreibung

Die vorliegende Erfindung betrifft eine Bügelscharniervorrichtung gemäß Anspruch 1 sowie einen hiermit ausgestatteten Personenkraftwagen gemäß Anspruch 5.

Eine in einem Personenkraftwagen befindliche Bügelscharniervorrichtung dient dazu, einen Gepäckraumdeckel, mithin eine Hecklappe oder einen Heckdeckel, gegenüber einem Gepäckraum öffnenbar bzw. verschließbar zu gestalten, wie beispielsweise aus der US 2,947,025 A oder der US 2016/0251036 A1 bekannt ist. Die Bügelscharniervorrichtung weist hierzu einen Scharnierbügel auf, an dem einenends die Heckklappe bzw. der Heckdeckel montiert ist. An dem diesen Ende gegenüberliegenden Ende kann der Scharnierbügel optional mit einem motorisch angetriebenen Antriebsmechanismus wirkverbunden sein. Der Scharnierbügel ist derart gelagert, dass seine Relativbewegung durch eine in einer Gepäckraumverkleidung eines Gepäckraumes befindliche Öffnung ermöglicht ist.

Aus der DE 10 2006 028 008 A1, der DE 197 34 320 C2 und der CN 1 11 661 168 A ist jeweils eine Bügelscharniervorrichtung mit einem Scharnierbügel bekannt, an dem ein Gepäckraumdeckel montierbar und der eingerichtet ist, durch eine in einer Gepäckraumverkleidung eines Personenkraftwagens befindliche, durch eine Wandung begrenzte Öffnung zwischen einer Öffnungsstellung und einer Schließstellung bewegt zu werden. Der Scharnierbügel ist von einer ihm gegenüber ortsfesten Scharnierbügelabdeckung umgeben, so dass ersterer von der Scharnierbügelabdeckung im Wesentlichen abgedeckt bzw. im montierten Zustand der Scharnierbügelabdeckung und insbesondere bei vollständig geöffnetem Gepäckraumdeckel in einem Sichtbereich eines Nutzers verdeckt wird.

Aus der der DE 10 2018 125 552 A1 schließlich ist eine Bügelscharniervorrichtung mit einem Scharnierbügel bekannt, an dem ein Gepäckraumdeckel montierbar und der eingerichtet ist, durch eine in einer Gepäckraumverkleidung eines Personenkraftwagens befindliche, durch eine Wandung begrenzte Öffnung zwischen einer Öffnungsstellung und einer Schließstellung bewegt zu werden. Der aus dieser Druckschrift bekannte Scharnierbügel ist teleskopartig ausgebildet und somit nicht ortsfest von einer Scharnierbügelabdeckung umgeben.

In der betrieblichen Praxis zeigt sich nun, dass in dem Bereich, in dem der Scharnierbügel der Öffnung in der Gepäckraumverkleidung des Gepäckraumes benachbart ist, Fugen vorhanden sind, die von einem Betrachter in nachteiliger Weise nicht immer als ästhetisch wahrgenommen werden. Darüber hinaus weisen die aus dem Stand der Technik bekannten Vorrichtungen in nachteiliger Weise einen komplexen Aufbau auf.

Es ist Aufgabe der vorliegenden Erfindung, diesen Nachteil zu überwinden.

Diese Aufgabe wird durch eine Bügelscharniervorrichtung mit einem Scharnierbügel gelöst, an dem ein Gepäckraumdeckel montierbar und der eingerichtet ist, durch eine in einer Gepäckraumverkleidung eines Personenkraftwagens befindliche, durch eine Wandung begrenzte Öffnung zwischen einer Öffnungsstellung und einer Schließstellung bewegt zu werden, wobei der Scharnierbügel von einer ihm gegenüber ortsfesten Scharnierbügelabdeckung umgeben ist. Die erfindungsgemäße Bügelscharniervorrichtung zeichnet sich dadurch aus, dass die Außenseite der Scharnierbügelabdeckung in ihrem dem Gepäckraumdeckel abgewandten Bereich einen sich in der Längsrichtung der Scharnierbügelabdeckung verbreiternden Abschnitt aufweist, der eingerichtet ist, die Öffnung in der Öffnungsstellung zu verschließen. Ferner ist erfindungsgemäß vorgesehen, dass die Innenseite der Scharnierbügelabdeckung mindestens einen Abstützabschnitt aufweist, der mindestens teilweise gegen die Außenseite des Scharnierbügels anliegt. Der mindestens eine Abstützabschnitt ist dabei, in Längsrichtung des Scharnierbügelabdeckung betrachtet, von dem sich verbreiternden Abschnitt der Scharnierbügelabdeckung beabstandet.

Es sei angemerkt, dass ein vollständiger Verschluss der Fuge erfindungsgemäß vorgesehen, in der Praxis jedoch nicht immer möglich ist, da insbesondere temperaturindizierte Bauteiltoleranzen auszugleichen sind. Wenn hier also von einer erfindungsgemäß verschlossenen Öffnung die Rede ist, so umfasst dies nicht nur den Fall eines vollständigen Abschlusses der Öffnung durch den verbreiterten Abschnitt, sondern auch einen bauteiltoleranzbedingten Spalt zwischen der Stufe und der Wandung. Dieser Spalt ist aber gegenüber den aus dem Stand der Technik bekannten Fugen erheblich kleiner ausgebildet und weist eine Breite von bevorzugt maximal 2 mm, besonders bevorzugt 1 mm, auf. Darüber hinaus kann der Spalt in vorteilhafter Weise in der Öffnung nicht nur allseitig um die Scharnierbügelabdeckung herum, sondern dieser nur einseitig oder zweiseitig benachbart vorgesehen sein. In vorteilhafter Weise ist also durch einen überraschend einfachen und vergleichsweise kostengünstigen Aufbau eine optisch gefällige, kundenwertige und funktionstüchtige Abdeckung der aus dem Stand der Technik bekannten Fuge ermöglicht.

Es sei ferner angemerkt, dass die genannte Wandung Teil der die Öffnung begrenzenden Gepäckraumverkleidung selbst oder aber ein zusätzliches Bauteil, insbesondere eine Blende, sein kann, das an dem Rand der Gepäckraumverkleidung und diesen mindestens teilweise umrahmend angeordnet ist.

Wie zuvor offenbart sind der Scharnierbügel und die Scharnierbügelabdeckung miteinander verbunden; insbesondere kann die Scharnierbügelabdeckung an dem Scharnierbügel geclipst oder verschraubt sein.

Ausgehend von einer Schließstellung, in welcher der Gepäckraumdeckel den Gepäckraum verschließt, wird der Gepäckraumdeckel durch eine geeignete Verschwenkbewegung des Scharnierbügels solange bewegt, bis er seine den Gepäckraum freigebende Öffnungsstellung einnimmt. Hierbei werden der Scharnierbügel und die ihn abdeckende Scharnierbügelabdeckung durch eine in der Gepäckraumverkleidung befindliche Öffnung bewegt, die von einer Wandung umschlossen ist. Die Größe der zwischen der Außenfläche der Gepäckraumverkleidung und der Wandung vorhandenen Fuge ist derart bemessen, dass die genannte Verschwenkbewegung bzw. Öffnungsbewegung der Scharnierbügelabdeckung gegenüber der Wandung im Wesentlichen berührungslos erfolgt. Hierdurch entfallen in vorteilhafter Weise durch eine ansonsten vorhandene Reibbewegung der genannten Elemente erzeugte Störgeräusche und Oberflächenbeschädigungen.

Es versteht sich, dass die den Scharnierbügel überdeckende Scharnierbügelabdeckung ein gewisses Maß an Flexibilität aufweisen muss, um bei ihrer Bewegung zur Einnahme der Schließstellung fertigungsbedingte Maßabweichungen und die mit der Größe und Anzahl der betrachteten Bauteile verbundene sehr große Toleranzkette ausgleichen zu können. Auf der anderen Seite darf die Flexibilität der Scharnierbügelabdeckung nicht zu groß sein, um eine auch im Übrigen ausreichende mechanische Stabilität aufzuweisen. Es ist daher vorgesehen, dass der dem Gepäckdeckel benachbarte Bereich der Scharnierbügelabdeckung mindestens mit einem Abstützabschnitt gegen den Scharnierbügel anliegt, während er an seinem diesen Ende entfernten Bereich von dem Scharnierbügel beabstandet ist. In besonders bevorzugter Weise ist vorgesehen, dass der sich in der Längsrichtung der Scharnierbügelabdeckung verbreiternde Abschnitt keinen Abstützabschnitt aufweist, In vorteilhafter Weise ist hierdurch zum einen eine die Steifigkeit der Bügelscharniervorrichtung erhöhende Maßnahme in der Nähe des Gepäckraumdeckels, zum anderen eine demgegenüber steifigkeitsverringernde Maßnahme in einem von dem Gepäckraumdeckel entfernten Bereich der Scharnierbügelabdeckung geschaffen.

Insgesamt stellt die Erfindung somit in vorteilhafter Weise eine Bügelscharniervorrichtung mit einer elastisch selbstzentrierenden Scharnierbügelabdeckung bereit.

Gemäß einer bevorzugten Ausführungsform der erfindungsgemäßen Bügelscharniervorrichtung ist vorgesehen, dass der sich in der Längsrichtung der Scharnierbügelabdeckung verbreiternde Abschnitt als kontinuierliche Strecke oder als eine von der Scharnierbügelabdeckung abragende Stufe ausgebildet ist und auf seiner dem Gepäckraumdeckel abgewandten Seite einen mit der Wandung kooperierenden Führungsabschnitt aufweist. Mit anderen Worten ist die Scharnierbügelabdeckung gegenüber jenen Bereichen, die in der geöffneten Position dem Führungsabschnitt benachbart sind, kontinuierlich bzw. im Fall der Stufe sprunghaft aufgeweitet. Damit erstreckt sich ein Führungsabschnitt im Wesentlichen in Fahrzeughochrichtung eines entsprechend ausgestatteten Personenkraftwagen derart, dass er bei einer Schließbewegung des Gepäckraumdeckels mindestens teilweise gegen die Wandung anliegt und durch diese geführt sowie ausgerichtet wird. Hiervon beabstandete Abschnitte der Außenseite der Scharnierbügelabdeckung sind von dem Führungsabschnitt entfernt und werden somit bei einer Bewegung des Heckdeckels nicht von dem Führungsabschnitt geführt. Insgesamt wird hierdurch die Einnahme der Öffnungsstellung durch den Gepäckraumdeckel in vorteilhafter Weise erleichtert.

In besonders bevorzugter Weise befindet sich der Führungsabschnitt bei der Scharnierbügelabdeckung mit abragender Stufe, in Einbaulage des Personenkraftwagens betrachtet, außerhalb eines Sichtbereiches eines Nutzers bzw. unterhalb der Gepäckraumverkleidung. Mithin wird der Führungsabschnitt vollkommen abgedeckt, was den ästhetischen Eindruck der erfindungsgemäßen Vorrichtung weiter verbessert.

Gemäß einer weiteren bevorzugten Ausführungsform der erfindungsgemäßen Bügelscharniervorrichtung ist vorgesehen, dass die Querschnittsfläche der Scharnierbügelabdeckung in dem Bereich, welcher der Wandung in der Öffnungsstellung benachbart ist, größer ist als in einem hiervon beabstandeten Bereich der Scharnierbügelabdeckung. Es ist also vorgesehen sein, dass die Scharnierbügelabdeckung, in vollständig geöffneter Position und in deren Längsrichtung betrachtet, im Wesentlichen im Bereich des Führungsabschnittes eine größere Ausdehnung in Querrichtung als ihre hierzu unterhalb und/oder oberhalb des Führungsabschnittes befindlichen Bereiche aufweist. Hierdurch ist in vorteilhafter Weise eine sowohl optisch besonders ansprechende als auch funktionelle Scharnierbügelabdeckung geschaffen.

Gemäß einer besonders bevorzugten Ausführungsform beträgt der Anteil des steifigkeitserhöhten Bereiches an der Gesamtlänge der vollständig ausgefahrenen Scharnierbügelabdeckung im Wesentlichen drei Viertel, während der Anteil des demgegenüber steifigkeitsverringerten Abschnittes im Wesentlichen ein Viertel der Gesamtlänge der vollständig ausgefahrenen Scharnierbügelabdeckung entspricht. Gemäß einer anderen bevorzugten Ausführungsform beträgt der Anteil des steifigkeitserhöhten Bereiches an der Gesamtlänge der vollständig ausgefahrenen Scharnierbügelabdeckung im Wesentlichen ein Drittel, während der Anteil des demgegenüber steifigkeitsverringerten Abschnittes im Wesentlichen zwei Drittel der Gesamtlänge der vollständig ausgefahrenen Scharnierbügelabdeckung entspricht. Gemäß einer weiteren bevorzugten Ausführungsform beträgt der Anteil des steifigkeitserhöhten Bereiches an der Gesamtlänge der vollständig ausgefahrenen Scharnierbügelabdeckung im Wesentlichen ein Viertel, während der Anteil des demgegenüber steifigkeitsverringerten Abschnittes im Wesentlichen drei Viertel der Gesamtlänge der vollständig ausgefahrenen Scharnierbügelabdeckung entspricht. Alternativ kann vorgesehen sein, dass der Anteil des steifigkeitserhöhten Bereiches an der Gesamtlänge der vollständig ausgefahrenen Scharnierbügelabdeckung und der Anteil des demgegenüber steifigkeitsverringerten Abschnittes jeweils im Wesentlichen der Hälfte der Gesamtlänge der vollständig ausgefahrenen Scharnierbügelabdeckung entsprechen. Der jeweilige Startpunkt für die Bemessung der zuvor genannten Strecken bzw. deren Anteile an der Gesamtlänge der Scharnierbügelabdeckung befindet sich an dem dem Gepäckraumdeckel benachbarten Bereich der Scharnierbügelabdeckung.

Ein vergleichsweise einfaches Mittel zur Erhöhung der genannten Steifigkeit im Bereich des Gepäckraumdeckels ist in vorteilhafter Weise geschaffen, wenn der gegen den Scharnierbügel anliegende Abstützabschnitt als von der Scharnierbügelabdeckung abragender Steg ausgebildet ist. Dies gilt umso mehr, wenn eine Anzahl der genannten Abstützabschnitte vorgesehen ist. Diese können in vorteilhafter Weise als sich von der Innenseite der Scharnierbügelabdeckung in Richtung Scharnierbügel abragende Stege ausgebildet sein, die sich gegen Letzteren abstützen und/oder in darin vorhandenen Aufnahmen gelagert sind.

Die weiter oben dargestellte Aufgabe wird ebenfalls durch einen Personenkraftwagen mit einem eine Gepäckraumverkleidung aufweisenden Gepäckraum gelöst, der durch einen einenends an einer Bügelscharniervorrichtung befestigten Gepäckraumdeckel wahlweise geöffnet oder geschlossen werden kann, wobei die Bügelscharniervorrichtung gemäß der zuvor offenbarten Art ausgebildet ist. Die hierzu dargestellten Vorteile gelten adäquat.

Gemäß einer bevorzugten Ausführungsform ist vorgesehen, dass die Wandung und die Stufe der Scharnierbügelabdeckung in der Öffnungsstellung eine ebene Fläche ausbilden. Hierdurch ist in vorteilhafter Weise eine besonders ansprechende Gestaltung der erfindungsgemäßen Vorrichtung bei geöffnetem Gepäckraumdeckel geschaffen. Es versteht sich jedoch, dass auch eine andere optische Gestaltung möglich ist. So kann der Übergang zwischen der Stufe der Scharnierbügelabdeckung und der Gepäckraumverkleidung als nicht ebene Fläche, insbesondere in Form einer Schräge oder eines Absatzes ausgebildet sein.

Wie zuvor offenbart ist es günstig, wenn die sich bewegende Scharnierbügelabdeckung ein gewisses Maß an Führung erfährt. In vorteilhafter Weise ist daher vorgesehen, dass sich die Wandung, ausgehend von einer dem Gepäckraumdeckel gegenüberliegenden Seite, in Richtung des Gepäckraumdeckels verjüngt.

Gemäß einer bevorzugten Ausführungsform ist vorgesehen, dass der Führungsabschnitt und die Wandung orthogonal zu einer von der Gepäckraumverkleidung aufgespannten virtuellen Ebene angeordnet sind. Hierdurch wird nicht nur eine gute Führung der sich durch die Öffnung bewegende Scharnierbügelabdeckung, sondern auch eine ästhetische Ausgestaltung der in der Öffnungsstellung des Gepäckraumdeckels nebeneinander befindlichen Stufe und Gepäckraumverkleidung geschaffen.

Nachstehend erfolgt unter Bezugnahme auf die beigefügten, nicht maßstäblichen Figuren eine detaillierte, nicht präjudizierende, insbesondere einschränkende, Beschreibung eines Ausführungsbeispiels der vorliegenden Erfindung:
- Fig. 1: ist eine perspektivische Ansicht eines Teils eines erfindungsgemäßen Personenkraftwagens mit einer erfindungsgemäßen Bügelscharniervorrichtung.
- Fig. 2: ist eine Schnittansicht durch die in Figur 1 dargestellte Bügelscharniervorrichtung.
- Fig. 3: zeigt eine gegenüber der in Fig. 1 dargestellten Ausführungsform alternative Ausführungsform eines Teils eines Personenkraftwagens mit einer Bügelscharniervorrichtung in perspektivischer Ansicht.
- Fig. 4: zeigt einen Teil einer Scharnierbügelabdeckung von innen.
- Fig. 5: ist eine vergrößerte Querschnittsansicht einer alternativen Ausführungsform einer teilweise abgebildeten Scharnierbügelabdeckung im Bereich eines Führungsabschnittes.

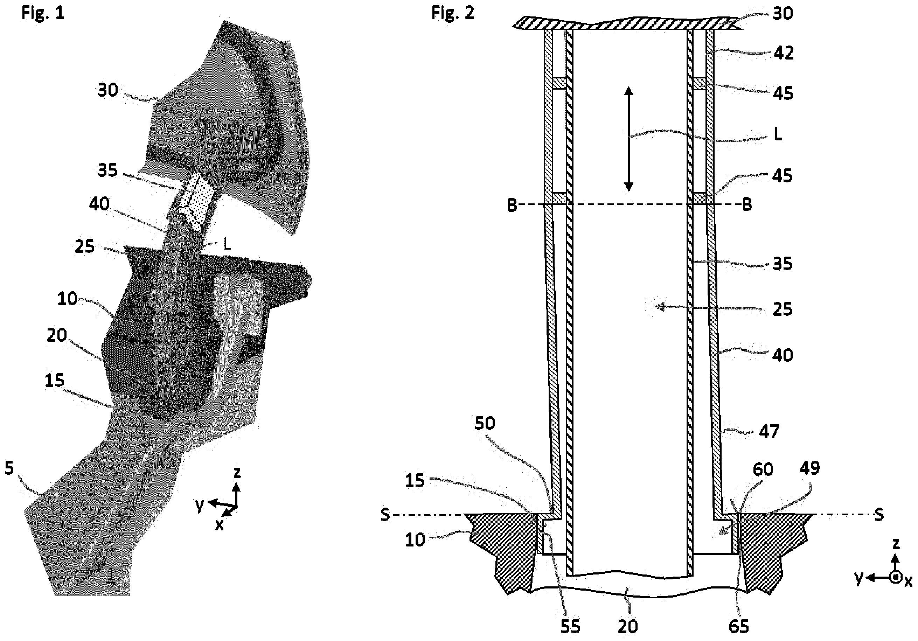

In Figur 1 ist ein Teil eines erfindungsgemäßen Personenkraftwagens 1 gezeigt, dessen Gepäckraum 5 in an sich bekannter Weise eine Gepäckraumverkleidung 10 aufweist. In der Gepäckraumverkleidung 10 befindet sich eine durch eine Wandung 15 begrenzte Öffnung 20 mit einen im Wesentlichen rechteckigen Querschnitt. Durch die Öffnung 20 hindurch ist eine Bügelscharniervorrichtung 25 entsprechend ihrer Längsrichtung L manuell, oder motorisch angetrieben, in bzw. entgegen der Fahrzeughochrichtung z bewegbar, um den Gepäckraum 5 in an sich bekannter Weise vermittels eines an dem der Gepäckraumverkleidung 10 entfernten Ende der Bügelscharniervorrichtung 25 befestigten Gepäckraumdeckel 30 wahlweise zu öffnen bzw. zu schließen. In der in Figur 1 gezeigten Position ist der Gepäckraumdeckel 30 vollständig geöffnet und befindet sich somit in seiner Öffnungsstellung.

Die Bügelscharniervorrichtung 25 umfasst einen in Figur 1 lediglich symbolisch abgebildeten Scharnierbügel 35, der an seiner Außenseite von einer Scharnierbügelabdeckung 40 umgeben ist. Zum besseren Verständnis der Erfindung ist die Bügelscharniervorrichtung 25 der Figur 1 nochmals in Figur 2 in Schnittansicht gezeigt. In ihrem in der Figur 2 oberen Bereich, mithin in der Nähe des Gepäckraumdeckels 30, weist die Scharnierbügelabdeckung 40 an ihrer Innenseite 42 eine Reihe von gegen den Scharnierbügel 35 anliegenden Abstützabschnitten 45 auf. Die gemäß der hier gezeigten Ausführungsform als gleich große Stege ausgebildeten Abstützabschnitte 45 weisen in x-y-Ebene betrachtet eine im Wesentlichen U-förmige Gestalt auf und umfassen den Scharnierbügel 35 an drei Seiten, um die Gesamtsteifigkeit der Scharnierbügelabdeckung 40 in dem genannten oberen Bereich zu erhöhen.

In dem unteren Bereich der Bügelscharniervorrichtung 25 hingegen, mithin in der Nähe der Gepäckraumverkleidung 10, sind keine Abstützabschnitte 45 vorgesehen. Vielmehr weist das von dem Gepäckraumdeckel 30 distal entfernte Ende der Scharnierbügelabdeckung 40 an seiner Außenseite 47 einen sich verbreiternden Abschnitt 49 auf, der gemäß dem hier gezeigten Ausführungsbeispiel als eine umlaufende, sich von dem Scharnierbügel 35 entfernende bzw. von diesem abragende Stufe 50 ausgebildet ist, von der sich ein Führungsabschnitt 55 in Längsrichtung der Scharnierbügelabdeckung 40 in der Figur 2 nach unten erstreckt.

Für den Fall, dass der in einer Verschließstellung befindliche Gepäckraumdeckel 30 geöffnet werden soll, bewegt sich die Bügelscharniervorrichtung 25 durch die Öffnung 20 entsprechend der Figur 2 nach oben. Um den Führungsabschnitt 55 der Scharnierbügelabdeckung 40 leichter in eine gewünschte Position bringen zu können, ist die Wandung 15 zunächst sich verjüngend ausgebildet, um dann in einen abstandskonstanten Bereich überzugehen, in dem der Führungsabschnitt 55 seitlich gegen die Wandung 15 zur Anlage kommt. In der gezeigten Öffnungsstellung des Gepäckraumdeckels 30 liegt der Führungsabschnitt 55 in der Öffnung 20 einseitig gegen die Wandung 15 an, wobei eine etwaige relative Bewegung des unteren Bereiches der Scharnierbügelabdeckung 40 gegenüber dem Scharnierbügel 35 aufgrund der gegenüber dem oberen Bereich geringeren Steifigkeit der Bügelscharniervorrichtung 25, mit Ausnahme in Fahrzeughochrichtung z, gewünscht ist. In der final eingenommenen Schließstellung gemäß der Figur 2 bilden der Absatz 50 und die Wandung 10 darüber hinaus eine im Wesentlichen stufenlose, gemäß der hier gezeigten Ausführungsform sich in der x-y-Ebene erstreckende ebene Fläche 60 aus. Ein dem Berührungsbereich von Wandung 15 und Führungsabschnitt 55 gegenüber liegender Spalt 65 zwischen Wandung 15 und Führungsabschnitt 55 bildet sich, wenn überhaupt, toleranzbedingt aus und ist erkennbar kleiner als eine aus dem Stand der Technik bekannte Fuge zwischen einer Wandung und einem Scharnierbügel (jeweils nicht gezeigt). Mithin sind die Öffnung 20 selbst sowie etwaige darin befindliche Gegenstände unterhalb einer Sichtbereichsgrenze S - S von einem hier nicht gezeigten Betrachter nicht zu erkennen.

Es sei angemerkt, dass gemäß diesem Ausführungsbeispiel der genannte obere Bereich im Wesentlichen eine Länge von einem Drittel der Gesamtlänge der aus der Scharnierbügelabdeckung 40 vollständig ausgefahrenen Scharnierbügelabdeckung 40 beträgt, während der genannte untere Bereich im Wesentlichen eine Länge von zwei Dritteln der Gesamtlänge der aus der Scharnierbügelabdeckung 40 vollständig ausgefahrenen Scharnierbügelabdeckung 40 beträgt. Diese in der Figur 2 durch die Linie B-B symbolisierten Längenverhältnisse sind jedoch nicht zwingend; vielmehr können, je nach gewünschter Steifigkeit der Bügelscharniervorrichtung 25, auch andere Längenverhältnisse vorgesehen sein. So ist es insbesondere möglich, den vergleichsweise steiferen Bereich durch geeignete Maßnahmen, insbesondere durch eine dem Gepäckraumdeckel 30 nähere Anordnung und/oder eine Erhöhung der Anzahl und/oder eine geometrische Anpassung von Abschnitten 45 kürzer ausfallen zu lassen.

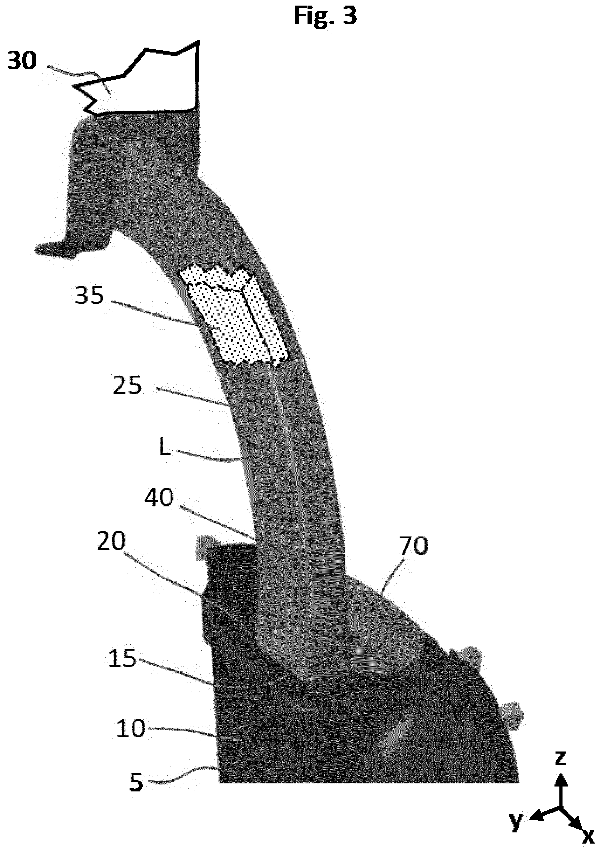

In Figur 3 ist eine gegenüber der in Fig. 1 dargestellten Ausführungsform alternative Ausführungsform eines Teils eines erfindungsgemäßen Personenkraftwagens 1 mit einer erfindungsgemäßen, in Öffnungsposition befindlichen Bügelscharniervorrichtung 25 in perspektivischer Ansicht dargestellt. Bei dieser ist der sich verbreiternde Abschnitt 49 nicht als Stufe 50, sondern als kontinuierliche Strecke 70 ausgebildet, deren Größe in einer virtuellen x-y-Ebene bzw. Breite, in Längsrichtung L betrachtet, von einem dem Gepäckraumdeckel 30 näheren Bereich in Richtung Öffnung 20 zunimmt. Auch gemäß dieser Ausführungsform sind in dem zuletzt genannten Bereich keine Abstützabschnitte 45 vorgesehen.

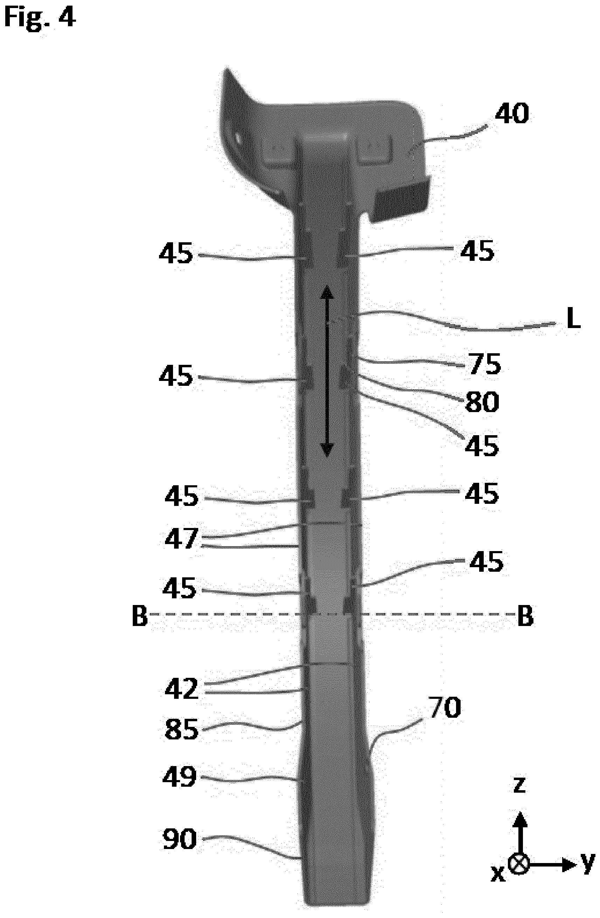

In Figur 4 ist nunmehr ein Teil einer Scharnierbügelabdeckung 25 von innen gezeigt. Mit ihrem oberen, kopfartig ausgebildeten Teil wird die Scharnierbügelabdeckung 40 an die hier nicht dargestellte Gepäckraumverkleidung im Bereich des Gepäckraumdeckels 30 befestigt. In ihrer Längsrichtung L betrachtet links und rechts befinden sich, in symmetrischer Anordnung, jeweils vier Abstützabschnitte 45, die in einer virtuellen x-y-Ebene jeweils im Wesentlichen L-förmig ausgebildet sind. Jeder der L-förmigen Abstützabschnitte 45 liegt mit seinem jeweiligen Anlageabschnitt 75 bzw. Anlageabschnitt 80 im montierten Zustand an dem in dieser Figur nicht gezeigten Scharnierbügel 35 an. Es sei angemerkt, dass in der Figur 4 lediglich ein Abstützabschnitt 45 mit Bezugszeichen für den Anlageabschnitt 75 bzw. Anlageabschnitt 80 versehen ist, aber sämtliche Abstützabschnitte 45 jeweils einen Anlageabschnitt 75 bzw. Anlageabschnitt 80 besitzen.

Die Abstützabschnitte 45 sind, in Längsrichtung L betrachtet, von dem einem Gepäckraumdeckel 35 benachbarten Bereich bis zu einem unteren Bereich B verteilt angeordnet. Die entsprechende Strecke beträgt im Wesentlichen zwei Drittel der Gesamtlänge der Scharnierbügelabdeckung 40. Jenseits einer den unteren Bereich trennenden virtuellen Grenze, mithin in Richtung desjenigen Abschnittes der Scharnierbügelabdeckung 40, der im montierten Zustand der Gepäckraumverkleidung 10 benachbart ist, sind keine Abstützabschnitte 45 vorgesehen, so dass dieser Bereich gegenüber dem dem Gepäckraumdeckel 35 benachbarten Bereich weniger steif ausgebildet ist. In einem hierzu noch weiter entfernten Abschnitt ist ein als kontinuierliche Strecke 70 ausgebildeter, sich verbreiternder Abschnitt 49 vorgesehen, der im montierten Zustand und in Öffnungsstellung des hier nicht gezeigten Gepäckraumdeckels 30 gegen die Wandung 15 im Wesentlichen anliegt. Wie zu erkennen ist, besitzt der Abschnitt 49 an dieser Stelle seine größte Breite bzw. Ausdehnung in einer virtuellen x-y-Ebene. Oberhalb und unterhalb des Abschnittes 49 hingegen sind die jeweiligen Breiten bzw. Ausdehnungen geringer, wie durch die Bezugszeichen 85 und 90 symbolisiert ist.

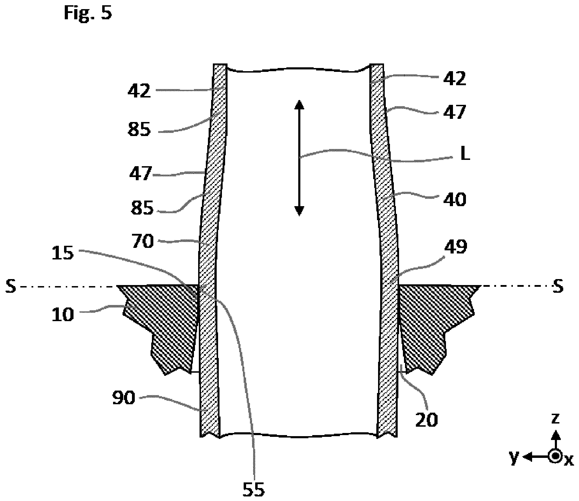

In Figur 5 ist nunmehr eine vergrößerte Querschnittsansicht einer alternativen Ausführungsform einer teilweise abgebildeten Scharnierbügelabdeckung 40 im Bereich eines Führungsabschnittes 55 gezeigt, wobei aus Gründen der Übersichtlichkeit auf eine Darstellung des Scharnierbügels 35 selbst verzichtet wurde und die an sich vorgesehenen Abstützabschnitte 45 aufgrund des gewählten Bildausschnittes nicht sichtbar sind. Der sich verbreiternde Abschnitt 49 ist als kontinuierliche Strecke 70 ausgebildet, dessen größte Ausdehnung bzw. Breite in einer virtuellen x-y-Ebene in demjenigen Bereich der Scharnierbügelabdeckung 40 zu finden ist, die gegen die Wandung 15 in dem hier gezeigten aufgestellten Zustand des Gepäckraumdeckels 30 anliegt. Die Ausdehnung des demgegenüber oberhalb befindlichen Abschnittes 85 bzw. unterhalb befindlichen Abschnittes 90 sind hingegen kleiner und ermöglichen eine weitgehend freie und damit geräuscharme, jedoch durch den Führungsabschnitt 55 räumlich kontrollierte Bewegung der Scharnierbügelabdeckung 40.

Es sei angemerkt, dass der in den Figuren 1 und 3 gezeigte Teil des Personenkraftwagen 1 quasi dessen Steuerbordseite darstellt. Die zuvor gemachten Ausführungen gelten jedoch in adäquater Weise für die hier nicht gezeigte Backbordseite, die ebenfalls eine erfindungsgemäße Bügelscharniervorrichtung 25 aufweist, deren Aufbau dem Aufbau einer in Figur 1 bzw. Figur 3 gezeigten, jedoch an der Längsmittelebene (x-z-Ebene) gespiegelten Bügelscharniervorrichtung 25 entspricht.

### Bezugszeichenliste:

- 1: Personenkraftwagen
- 5: Gepäckraum
- 10: Gepäckraumverkleidung
- 15: Wandung
- 20: Öffnung
- 25: Bügelscharniervorrichtung
- 30: Gepäckraumdeckel
- 35: Scharnierbügel
- 40: Scharnierbügelabdeckung
- 42: Innenseite
- 45: Abstützabschnitt
- 47: Außenseite
- 49: verbreiternder Abschnitt
- 50: Stufe
- 55: Führungsabschnitt
- 60: ebene Fläche
- 65: Spalt
- 70: kontinuierliche Strecke
- 75: Anlageabschnitt
- 80: Anlageabschnitt
- 85: Abschnitt
- 90: Abschnitt

- B - B: Grenze oberer / unterer Bereich
- L: Längsrichtung
- S - S: Sichtbereichsgrenze

- x, y, z: Koordinaten eines kartesischen Koordinatensystems gemäß ISO 4130-1978

## Patentansprüche

1. Bügelscharniervorrichtung (25), mit einem Scharnierbügel (35), an dem ein Gepäckraumdeckel (30) montierbar und der eingerichtet ist, durch eine in einer Gepäckraumverkleidung (10) eines Personenkraftwagens (1) befindliche, durch eine Wandung (15) begrenzte Öffnung (20) zwischen einer Öffnungsstellung und einer Schließstellung bewegt zu werden, wobei der Scharnierbügel (35) von einer ihm gegenüber ortsfesten Scharnierbügelabdeckung (40) umgeben ist, **dadurch gekennzeichnet, dass**
- die Außenseite (47) der Scharnierbügelabdeckung (40) in ihrem dem Gepäckraumdeckel (30) abgewandten Bereich einen sich in der Längsrichtung (L) der Scharnierbügelabdeckung (40) verbreiternden Abschnitt (49) aufweist, der eingerichtet ist, die Öffnung (20) in der Öffnungsstellung zu verschließen,
- die Innenseite (42) der Scharnierbügelabdeckung (40) mindestens einen Abstützabschnitt (45) aufweist, der mindestens teilweise gegen die Außenseite des Scharnierbügels (35) anliegt,
- wobei mindestens ein Abstützabschnitt (45), in Längsrichtung (L) des Scharnierbügelabdeckung (40) betrachtet, von dem sich verbreiternden Abschnitt (49) der Scharnierbügelabdeckung (40) beabstandet ist.

2. Bügelscharniervorrichtung (25) nach Anspruch 1, **dadurch gekennzeichnet, dass** der sich in der Längsrichtung (L) der Scharnierbügelabdeckung (40) verbreiternde Abschnitt (49) als kontinuierliche Strecke (70) oder als von der Scharnierbügelabdeckung (40) abragende Stufe (50) ausgebildet ist und auf seiner dem Gepäckraumdeckel (30) abgewandten Seite einen mit der Wandung (15) kooperierenden Führungsabschnitt (55) aufweist.

3. Bügelscharniervorrichtung (25) nach Anspruch 2, **dadurch gekennzeichnet, dass** die Querschnittsfläche der Scharnierbügelabdeckung (40) in dem Bereich, welcher der Wandung (15) in der Öffnungsstellung benachbart ist, größer ist als in einem hiervon beabstandeten Bereich der Scharnierbügelabdeckung (40).

4. Bügelscharniervorrichtung (25) nach einem der vorhergehenden Ansprüche, **dadurch gekennzeichnet, dass** der gegen den Scharnierbügel (35) anliegende Abstützabschnitt (45) als ein von der Scharnierbügelabdeckung (40) abragender Steg ausgebildet ist.

5. Personenkraftwagen (1), mit einem eine Gepäckraumverkleidung (10) aufweisenden, durch einen Gepäckraumdeckel (30) wahlweise öffnenbaren oder schließbaren Gepäckraum (5), welche Gepäckraumverkleidung (10) eine durch eine Wandung (15) begrenzte Öffnung (20) aufweist, durch die hindurch ein Teil einer den Gepäckraumdeckel (30) einenends aufweisenden Bügelscharniervorrichtung (25) bewegt werden kann, **dadurch gekennzeichnet, dass** die Bügelscharniervorrichtung (25) nach einem der vorhergehenden Ansprüche ausgebildet ist.

6. Personenkraftwagen (1) nach Anspruch 5 sowie einer Bügelscharniervorrichtung nach einem der Ansprüche 2 bis 4, **dadurch gekennzeichnet, dass** die Wandung (15) und die Stufe (50) der Scharnierbügelabdeckung (40) in der Öffnungsstellung eine ebene Fläche (60) ausbilden.

7. Personenkraftwagen (1) nach Anspruch 5 oder 6, **dadurch gekennzeichnet, dass** sich die Wandung (15), ausgehend von einer dem Gepäckraumdeckel (30) gegenüberliegenden Seite, in Richtung des Gepäckraumdeckels (30) verjüngt.

8. Personenkraftwagen nach einem der vorhergehenden Ansprüche sowie mit einer Bügelscharniervorrichtung (25) nach einem der Ansprüche 2 bis 4, **dadurch gekennzeichnet, dass** der Führungsabschnitt (55) in der Öffnungsstellung gegen die Wandung (15) anliegt.

## Claims

1. Curved hinge apparatus (25) having a curved hinge (35) on which a luggage compartment cover (30) can be mounted and which is configured to be moved between an open position and a closed position through an opening (20) which is located in a luggage compartment trim (10) of a passenger vehicle (1) and which is delimited by a wall (15), wherein the curved hinge (35) is surrounded by a curved hinge cover (40) which is fixed in position with respect thereto, **characterized in that**
- the outer side (47) of the curved hinge cover (40) has in the region facing away from the luggage compartment cover (30) a portion (49) which expands in the longitudinal direction (L) of the curved hinge cover (40) and which is configured to close the opening (20) in the open position,
- the inner side (42) of the curved hinge cover (40) has at least one support portion (45) which abuts at least partially against the outer side of the curved hinge (35),
- wherein at least one support portion (45), when viewed in the longitudinal direction (L) of the curved hinge cover (40), is spaced apart from the expanding portion (49) of the curved hinge cover (40).

2. Curved hinge apparatus (25) according to Claim 1, **characterized in that** the portion (49) which expands in the longitudinal direction (L) of the curved hinge cover (40) is in the form of a continuous path (70) or a step (50) which protrudes from the curved hinge cover (40) and at the side thereof facing away from the luggage compartment cover (30) has a guiding portion (55) which cooperates with the wall (15).

3. Curved hinge apparatus (25) according to Claim 2, **characterized in that** the cross sectional surface-area of the curved hinge cover (40), in the region which is adjacent to the wall (15) in the open position, is greater than in a region of the curved hinge cover (40) with spacing therefrom.

4. Curved hinge apparatus (25) according to any one of the preceding claims, **characterized in that** the support portion (45) which abuts against the curved hinge (35) is in the form of a web which protrudes from the curved hinge cover (40).

5. Passenger vehicle (1) having a luggage compartment (5) which has a luggage compartment trim (10) and which can be selectively opened or closed by means of a luggage compartment cover (30), which luggage compartment trim (10) has an opening (20) which is delimited by a wall (15) and through which a portion of a curved hinge apparatus (25) which has the luggage compartment cover (30) at one end can be moved, **characterized in that** the curved hinge apparatus (25) is constructed in accordance with one of the preceding claims.

6. Passenger vehicle (1) according to Claim 5 and a curved hinge apparatus according to one of Claims 2 to 4, **characterized in that** the wall (15) and the step (50) of the curved hinge cover (40) form a planar face (60) in the open position.

7. Passenger vehicle (1) according to Claim 5 or 6, **characterized in that** the wall (15) starting from a side opposite the luggage compartment cover (30) tapers in the direction of the luggage compartment cover (30).

8. Passenger vehicle according to one of the preceding claims and having a curved hinge apparatus (25) according to one of Claims 2 to 4, **characterized in that** the guiding portion (55) abuts in the open position against the wall (15) .

## Revendications

1. Dispositif formant charnière à arceau (25), comprenant un arceau de charnière (35), sur lequel un capot de coffre à bagages (30) peut être monté et qui est conçu pour être déplacé entre une position ouverte et une position fermée à travers une ouverture (20) qui est située dans un habillage de coffre à bagages (10) d'une voiture particulière (1) et qui est délimitée par une paroi (15), l'arceau de charnière (35) étant entouré par un capot d'arceau de charnière (40) qui est fixe par rapport à lui, **caractérisé en ce que**
- le côté extérieur (47) du capot d'arceau de charnière (40), dans sa zone opposée au capot de coffre à bagages (30), comporte une portion (49) qui s'élargit dans la direction longitudinale (L) du capot d'arceau de charnière (40) et qui est conçue pour fermer l'ouverture (20) dans la position ouverte,
- le côté intérieur (42) du capot d'arceau de charnière (40) comporte au moins une portion d'appui (45) qui vient en appui au moins partiellement contre le côté extérieur de l'arceau de charnière (35),
- au moins une portion d'appui (45) étant espacée de la portion (49) qui s'élargit du capot d'arceau de charnière (40) par référence à la direction longitudinale (L) du capot d'arceau de charnière (40).

2. Dispositif formant charnière à arceau (25) selon la revendication 1, **caractérisé en ce que** la portion (49) qui s'élargit dans la direction longitudinale (L) du capot d'arceau de charnière (40) est conçue sous la forme d'une section continue (70) ou d'un gradin (50) saillant du capot d'arceau de charnière (40) et comporte une portion de guidage (55) qui coopère avec la paroi (15) sur son côté opposé au capot de coffre à bagages (30).

3. Dispositif formant charnière à arceau (25) selon la revendication 2, **caractérisé en ce que** l'aire en coupe transversale du capot d'arceau de charnière (40) dans la zone qui est adjacente à la paroi (15) dans la position ouverte est supérieure à celle dans une zone du capot d'arceau de charnière (40) qui est espacée de ladite zone précédente.

4. Dispositif formant charnière à arceau (25) selon l'une des revendications précédentes, **caractérisé en ce que** la portion d'appui (45) qui vient en appui contre l'arceau de charnière (35) est conçue comme une nervure saillant du capot d'arceau de charnière (40).

5. Voiture particulière (1), comprenant un coffre à bagages (5) qui comporte un habillage de coffre à bagages (10) et qui peut être sélectivement ouvert ou fermé par un capot de coffre à bagages (30), lequel habillage de coffre à bagages (10) comporte une ouverture (20) qui est délimitée par une paroi (15) et par laquelle peut être déplacée une partie d'un dispositif formant charnière à arceau (25) qui comporte à une extrémité le capot de coffre à bagages (30), **caractérisée en ce que** le dispositif formant charnière à arceau (25) est conçu selon l'une des revendications précédentes.

6. Voiture particulière (1) selon la revendication 5 et pourvue d'un dispositif formant charnière à arceau selon l'une des revendications 2 à 4, **caractérisée en ce que** la paroi (15) et le gradin (50) du capot d'arceau de charnière (40) forment une surface plane (60) dans la position ouverte.

7. Voiture particulière (1) selon la revendication 5 ou 6, **caractérisée en ce que** la paroi (15) s'amincit depuis un côté opposé au capot de coffre à bagages (30) en direction du capot de coffre à bagages (30).

8. Voiture particulière selon l'une des revendications précédentes et pourvue d'un dispositif formant charnière à arceau (25) selon l'une des revendications 2 à 4, **caractérisée en ce que** la portion de guidage (55) vient en appui contre la paroi (15) dans la position ouverte.
